# EUROPEAN PATENT SPECIFICATION

(11) **EP 0 484 599 B1**
(45) Date of publication and mention of the grant of the patent: **27.07.1994**
(21) Application number: 90312236.4
(22) Date of filing: 08.11.1990
(51) Int. Cl.: B65D 33/25, B31B 19/74, B29C 65/00

(54) **Closure for a bag**
Verschluss für einen Beutel
Fermeture pour un sac

(43) Date of publication of application: 13.05.1992
(73) Proprietor: FUJITOKUSHU SHIGYO COMPANY LIMITED, Nagoya-shi, Aichi-ken (JP)
(72) Inventor: Inagaki, Hiromichi, Inuyama-shi, Aichi-ken (JP)
(74) Representative: King, James Bertram

(56) References cited:
- EP-A- 0 276 554
- EP-A- 0 339 324
- US-A- 4 756 629
- PATENT ABSTRACTS OF JAPAN vol. 13, no. 552 (M-903)(3900) 8 December 1989,& JP-A-01 226556 (NIPPON TOKKYO KANRI) 11 September 1989,

## Description

This invention relates to a closure means for the mouth of a bag or like article, said means comprising two inter-engaging elongate profiled parts which may be pressed into engagement in a longitudinally progressive manner by a sliding action.

In a known closure the elongate concave and convex engaging profiled parts are formed on the surface of base tapes of plastic material.

The closure means is secured to the interior of the mouth of the bag so that the mouth of said bag may be closed and easily opened repeatedly as often as desired.

In the prior art, connection between the base tape and bag is formed directly using a single tape of polyethylene (PE) or polypropylene (PP). When securing the closure to the inside of the opening of the bag comprising a PE or PP film direct heat-sealing is used but if the bag film is of nylon, polyester, aluminium foil or the like, the base tape has to be separately adhered onto the inside of the bag. A prior art example is shown in Figure 5, having a closure 1 formed from a base tape 2 with a concave profile 3 and a base tape 4 with a convex profile 5. The base tapes 2 and 4 and a fusible plastic film 7 are adhered onto the internal face of bag 6 when the base tapes 2 and 4 are attached to the internal face of bag 6. If the sealers 10 and 11 are operated from the outside when heat-sealing the base tapes 2 and 4 to the internal face of bag 6, not only do the base tapes 2 and 4 melt together with the plastic film 7 of bag 6 but the base tapes 2 and 4 also tend to become fused to each other.

Therefore, prior art uses separators 8 and 9 inserted between the base tapes 2 and 4 for preventing same from becoming fused to each other. As a result continuous production of the bag 6 and closure 1 is not possible and the entire operation is intermittent.

Therefore, there are disadvantages as follows:-
a) The production line is intermittent, which prevents productivity being increased.
b) If the base tapes 2 and 4 are thin, they they are likely to become fused because of the heat dissipation during the heat-sealing process and there is a risk of the concave strip 3 and the convex strip 6 being deformed. Therefore, the prior art uses a thickness of 150 to 200 u for PE and 120 to 180 u for PP. If the thickness of base tapes 2 and 4 should be increased, a proper sealing cannot be obtained of the base tapes 2 and 4 unless the sealer temperature is raised by an amount corresponding to the thickness of the base tapes 2 and 4 which may then create pin-holes in the bag film. If the sealer temperature is raised then other portions are overheated with the problem of excessive fusion.
c) Because the base tapes 2 and 4 are made of PE, PP, or the like which can be heat-sealed, they have poor heat resistance, and in some cases they cannot be used for foodstuffs which need to be thawed or cooked, for example, in a microwave.

In EP 0339324A1 there is disclosed an arrangement for heat fusing the two parts of a so-called "zipper" to a sheet using a heat fusing intermediate layer. The technology therein disclosed applies each zipper part separately and uses heat rollers applied from the zipper side, after which the sheet is formed into a bag and the zipper parts joined together.

This invention seeks to provide a closure that can be produced continuously without the need to raise the sealer temperature or to reduce the thickness of the base tapes.

According to this invention there is provided a method for producing a bag from a plastics sheet, the bag having a closure comprising two inter-engaging elongate profiled parts formed as tapes which are connected by heat fusion to respective inside surfaces in the mouth of the bag, each tape having a fusing plastics film adhered thereto, said film having a fusion temperature lower than that of the tape, said tapes and the plastic sheet forming the bag being fed continuously and brought together with the application of heat to fuse the fusing plastic film on each tape with the plastic sheet forming the bag, characterised in that the tapes are fed with the profiled parts engaged and the heat to fuse said film is applied from the outside surfaces of the plastic sheet forming the bag.

This invention thus relates to a method of manufacturing a bag including closure means wherein a fusible plastic film having a lower fusion temperature than the base tape has previously been adhered onto the rear surface of the base tape adjacent the profiled parts to enable heat fusion to be effected at a temperature such that the bag and the plastic film can be fused to each other whilst the base tapes are not softened.

This invention provides also a closure for the mouth of a plastic bag, said closure comprising two inter-engaging elongate profiled parts formed on tapes each having a surface for heat fusion to a plastic bag, a fusing plastics film being adhered to each said surface, said fusing film having a temperature of fusion less than that of the tape, characterised in that the tape is fused to the inside surfaces of the mouth of the bag with the profiled parts engaged and with heat for the fusion being applied to the outside surfaces of the bag.

This invention is further described and illustrated with reference to the accompanying drawings showing an embodiment by way of example only also illustrating the method of manufacture.

In the drawings:
- Figure 1: shows a section through part of a bag with a closure heat-sealed to the inside of the bag mouth,
- Figure 2: shows a section of part of a bag wherein the closure according to this invention has been heat-sealed to the inside mouth of the bag by adhering a heat shielding film onto the closure tape,
- Figure 3: shows a section of a closure tape formed into a U-shape,
- Figure 4: shows, schematically, the method and apparatus for fixing closure tapes according to this invention to the inside of the mouth of a bag, and
- Figure 5: shows the prior art construction.

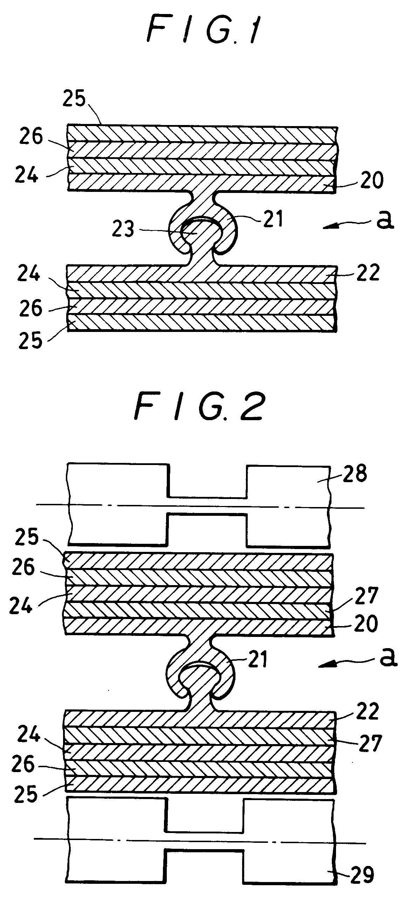

The closure "a" shown in Figure 1 has inter-engaging tapes 20,22, with respective concave profile part 21 and convex profile part 23 formed of nylon. A fusing plastic film 24 of polyethylene is adhered onto the outside surface of each tape 20 and 22.

A nylon bag 25 has a polyethylene film 26 bonded or otherwise adhered onto the inside surface and the fusing plastic film 24 and polyethylene film 26 are pressed by heat sealers at a temperature such that the polyethylene film 26 becomes fused to the film 24. During this heat-sealing, the base tapes 20 and 22 of nylon do not reach softening temperature and therefore do not become fused.

Figure 2 shows base tapes 20 and 22 made of polyethylene having a low fusion temperature with heat shielding films 27 adhered onto the outside surfaces for the case where the bag 25 is, for example, of nylon with the fusible plastic film 24 made of polyethylene adhered onto the outside of the heat shielding films 27 so that the fusible plastic film 24 and the polyethylene film 26 which has been adhered onto the internal face of bag 25 can be bonded using the sealers 28 and 29 at the fusion temperature of polyethylene.

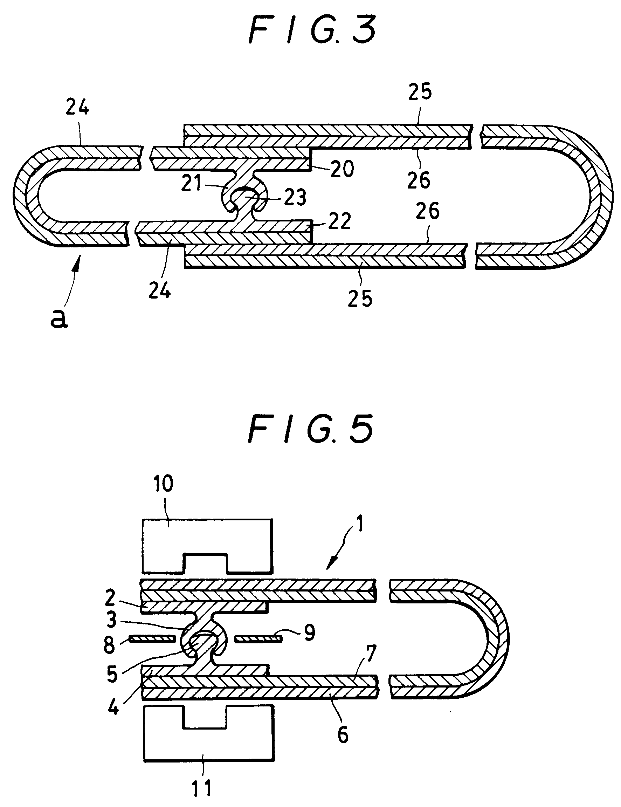

Figure 3 shows an embodiment where the closure tape has been formed into a U-shape with the two tapes joined by a web but whose construction is otherwise similar to that of Figure 1.

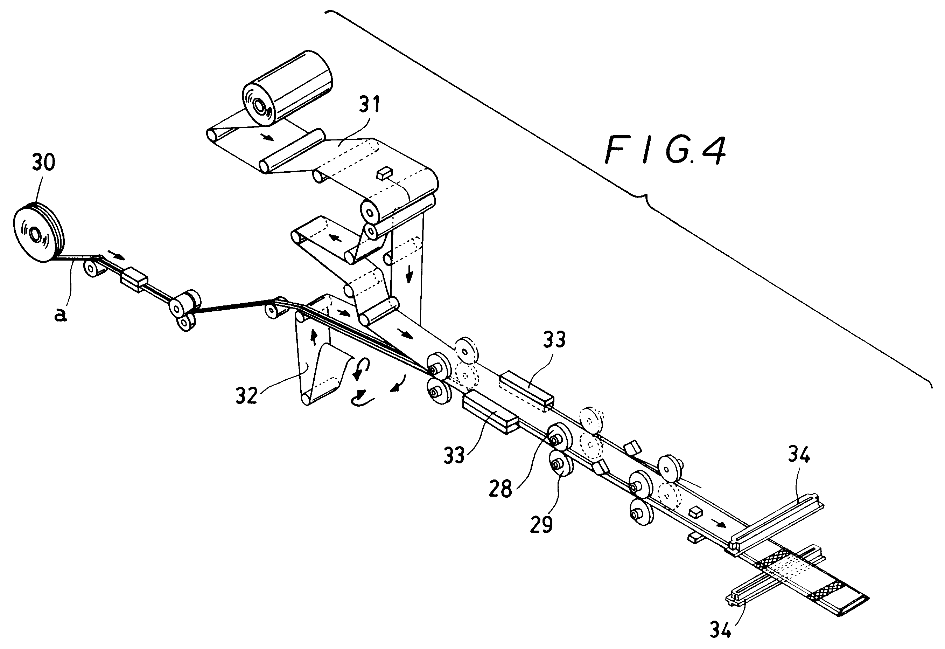

Figure 4 shows the manufacture of a bag by fixing the closure of the present invention to the interior of the mouth of the bag.

The closure "a" shown in Figures 1 and 2 is supplied from a reel 30 (as in Figure 3) with the concave strip 21 and the convex strip 23 pre-engaged with each other. This closure "a" is inserted between the front film 31 of bag 26 and the rear film 32 for side sealing first by a side sealer 33, then between the heat sealers 28 and 29 which have a groove to accommodate the concave strip 21 and the convex strip 23. The base tapes 20 and 22 are thus heat-sealed onto the inside of bag 25. In the next step, the base tapes and bag are cross sealed at the interval of one bag by the sealer 34, and then cut into individual bags between the cross-sealed parts.

The advantages of this invention are:-
a) The productivity can be increased because the closure tape can be heat-sealed continuously onto the film forming each bag body.
b) Because the film thickness of the tape in the closure can be thinned to about 100 u inclusive of the fusion tape, the temperature during the side sealing of a bag need not be raised, which eliminates problems such as pin holes and the like due to excessive softening in other parts.
c) Because the closure tape can be made of material having a high fusion point, the closure tape can be used for heat resistant bags used in microwave ovens.

## Claims

1. A method for producing a bag from a plastics sheet (25,26) the bag having a closure (20,22) comprising two inter-engaging elongate profiled parts (21,23) formed on tapes which are connected by heat fusion to respective inside surfaces in the mouth of the bag, each tape (20,22) having a fusing plastics film (24) adhered thereto, said film having a fusion temperature lower than that of the tape (20,22), said tapes and the plastic sheet (25,26) forming the bag being fed continuously and brought together with the application of heat to fuse the fusing plastic film (24) on each tape with the plastic sheet (26,25) forming the bag, characterised in that the tapes (20,22) are fed with the profiled parts (21,23) engaged and the heat to fuse said film (24) is applied from the outside surfaces of the plastic sheet (26,25) forming the bag.

2. A method according to Claim 1, characterised in that a heat shielding film (27) is disposed between each tape (20,22) and each fusing plastic film (24).

3. A method according to Claim 1 or 2, wherein the two tapes (20,22) are joined by a web (a) to form a U-shaped cross section closure.

4. A closure for the mouth of a plastic bag, said closure comprising two inter-engaging elongate profiled parts (21,23) formed on tapes (20,22) each having a surface for heat fusion to a plastic bag, a fusing plastics film (24) being adhered to each said surface, said fusing film having a temperature of fusion less than that of the tape (20,22), characterised in that the tape (20,22) is fused to the inside surfaces of the mouth of the bag with the profiled parts (21,23) engaged and with heat for the fusion being applied to the outside surfaces of the bag.

5. A closure according to Claim 4, characterised in that a heat shielding film (27) having a fusing temperature higher than that of the tape (20,22) and the fusing film (24) is interposed between each said tape and each said fusing film.

## Patentansprüche

1. Ein Verfahren zur Herstellung eines Beutels aus einer Kunststoffolie (25, 26), wobei der Beutel einen Verschluß (20, 22) mit zwei ineinander eingreifenden länglichen Profilteilen (21, 23) umfaßt, die an durch Heißverschmelzung mit den jeweiligen inneren Oberflächen in der Öffnung des Beutels verbundenen Bändern angeformt sind, während an jedem Band (20, 22) ein daran haftender schmelzender Kunststoffilm (24) angebracht ist und der besagte Film eine Schmelztemperatur hat, die niedriger ist als die des Bandes (20, 22), und zwar werden die besagten Bänder und die den Beutel bildende Kunststoffolie (25, 26) kontinuierlich zugestellt und unter Zufuhr von Wärme zusammengeführt, so daß der an jedem Band angebrachte schmelzende Kunstoffilm (24) mit der den Beutel bildenden Kunststoffolie (26, 25) verschmilzt, dadurch gekennzeichnet, daß die Bänder (20, 22) mit den profilierten Teilen (21, 23) in Eingriff zugestellt werden und die zum Schmelzen des besagten Films (24) dienende Wärme von den äußeren Oberflächen der den Beutel bildenden Kunststoffolie (26, 25) ausgehend zugeführt wird.

2. Ein Verfahren nach Anspruch 1, dadurch gekennzeichnet, daß zwischen jedem Band (20, 22) und jedem schmelzenden Kunststoffilm (24) ein Wärmeisolierfilm (27) angeordnet wird.

3. Ein Verfahren nach Anspruch 1 oder 2, bei dem die beiden Bänder (20, 22) durch einen Bügel (a) verbunden sind, so daß sie einen Verschluß mit U-förmigem Querschnitt bilden.

4. Ein Verschluß für die Öffnung eines Kunststoffbeutels, wobei der besagte Verschluß zwei an Bändern (20, 22) angeformte und ineinander eingreifende längliche Profilteile (21, 23) umfaßt, von denen jeder eine Oberfläche für Warmverschmelzung mit einem Kunststoffbeutel aufweist, und zwar wird an jede solche Oberfläche ein schmelzender Kunststoffilm (24) angeklebt, wobei die Schmelztemperatur des besagten schmelzenden Filmes niedriger ist als die des Bandes (20, 22), dadurch gekennzeichnet, daß das Band (20, 22) mit den Profilteilen (21, 23) in Eingriff mit den inneren Oberflächen der Beutelöffnung unter Zufuhr von Schmelzwärme zu den äußeren Oberflächen des Beutels verschmolzen wird.

5. Ein Verschluß nach Anspruch 4, dadurch gekennzeichnet, daß ein Wärmeisolierfilm (27), dessen Schmelztemperatur höher ist als die des Bandes (20, 22) und die des schmelzenden Films (24) zwischen dem jeweiligen besagten Band und dem jeweiligen besagten Schmelzfilm angeordnet wird.

## Revendications

1. Procédé de production d'un sac à partir d'une feuille de plastique (25, 26), le sac ayant une fermeture (20, 22) comprenant deux parties profilées allongées qui s'engagent mutuellement, formées sur des bandes qui sont reliées par fusion thermique aux surfaces intérieures respectives dans l'orifice du sac, une pellicule de plastique fusible (24) étant collée à chaque bande (20, 22), ladite pellicule ayant une température de fusion inférieure à celle de la bande (20, 22), lesdites bandes et la feuille de plastique (25, 26) formant le sac avançant continuellement et étant rapprochées ensemble avec l'application de chaleur pour fondre la pellicule de plastique fusible (24) sur chaque bande avec la feuille de plastique (26, 25) formant le sac, caractérisé en ce que les bandes (20, 22) sont acheminées avec les parties profilées (21, 23) engagées et que la chaleur nécessaire à la fusion de ladite pellicule (24) est appliquée depuis les surfaces extérieures de la feuille de plastique (26, 25) formant le sac.

2. Procédé selon Revendication 1, caractérisé en ce qu'une pellicule de protection thermique (27) est disposée entre chaque bande (20, 22) et chaque pellicule de plastique fusible (24).

3. Procédé selon Revendication 1 ou 2, dans lequel les deux bandes (20, 22) sont reliées par un tissu (a) pour former une fermeture de section transversale en forme de U.

4. Fermeture pour l'orifice d'un sac en plastique, ladite fermeture étant constituée de deux parties profilées allongées s'engageant mutuellement (21, 23) formées sur des bandes (20, 22) ayant chacune une surface pour la fusion thermique sur un sac en plastique, une pellicule en plastique fusible (24) étant collée à chaque surface précitée, ladite pellicule fusible ayant une température de fusion inférieure à celle de la bande (20, 22), caractérisée en ce que la bande (20, 22) est fondue sur les surfaces intérieures de l'orifice du sac avec les parties profilées (21, 23) engagées et la chaleur pour la fusion étant appliquée aux surfaces extérieures du sac.

5. Fermeture selon Revendication 4, caractérisée en ce qu'une pellicule de protection thermique (27) ayant une température de fusion supérieure à celle de la bande (20, 22) et de la pellicule fusible (24) est interposée entre chacune desdites bandes et chacune desdites pellicules fusibles.
